**Europäisches Patentamt**

**European Patent Office**

**Office européen des brevets**

(19)

(11) **EP 1 206 067 A1**

(12) **EUROPEAN PATENT APPLICATION**

(43) Date of publication:
**15.05.2002 Bulletin 2002/20**

(51) Int Cl.[7]: **H04L 12/24**, H04L 12/26

(21) Application number: **00309806.8**

(22) Date of filing: **06.11.2000**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Agilent Technologies, Inc. (a Delaware corporation)**
**Palo Alto, CA 94303 (US)**

(72) Inventors:
• **Love, Simon**
**Edingburgh EH9 2LU (GB)**

• **Goldsack, Patrick**
**Chipping Sodbury, Bristol BS17 6HX (GB)**

(74) Representative: **Coker, David Graeme et al**
**Agilent Technologies UK Ltd,**
**Legal Department,**
**M/S CSC1GM2,**
**Eskdale Road,**
**Winnersh Triangle**
**Wokingham, Berks RG41 5DZ (GB)**

(54) **Method of and apparatus for network measurement**

(57)    A method and apparatus for measuring parameters of a communications network is described, in particular to be applied in the measurement of round trip delays affecting data transfer in network communications. A data stream is monitored by probes (10,15) at least at first and second points in the network (5) and the time of occurrence at a first point of a first identifiable event (50) in a first direction in the data stream which has a counterpart identifiable event (55) in a second direction in the data stream is recorded and the time of occurrence of the counterpart identifiable event at a second is recorded. Similarly, the time of occurrence of the first identifiable event at the second point and the time of occurrence of the counterpart identifiable event at the second point is recorded and the data obtained correlated (35) to obtain round trip delays for particular transactions on the network.

Fig. 3

**EP 1 206 067 A1**

**Description**

**Introduction**

The present invention relates to a method and apparatus for measuring parameters of a communications network. The invention may in particular be applied in the measurement of round trip delays affecting data transfer in network communications.

Modem telecommunications and data networks are used extensively for a range of applications, from data transfer to running remote applications over a network. It is important to monitor the health and performance of such networks to ensure the continued smooth performance of applications and to spot potential problems. Potential problems in a network can include lack of response in an application, slow remote data retrieval times and general latency problems encountered in network operations.

Problems can arise from a variety of different sources such as the architecture of the network, bandwidth considerations, and usage patterns. Latency times in a network can have different sources, with physical distances and components such as routers and switches contributing to overall performance. Congestion may occur due to lack of processing power with the network server unable to run applications satisfactorily. The amount of network traffic may be too high for the network bandwidth and configuration chosen, leading to high levels of congestion. Similarly, network usage may peak at certain times leading to intolerable levels of congestion.

It is desirable to be able to obtain an accurate measure of network performance. Any such method should take into account the various factors involved which may adversely affect the accuracy of the measurements.

One method of monitoring network performance is to measure application flow in terms of round-trip delay of events in a data stream. For, example, the well known "ping" measurement reports the elapsed time between sending a frame to a Internet protocol (IP) node and receiving a response. Although this gives an indication of network layer performance it provides only a limited measure overall about how the network is performing at an application level. Another drawback typical of this type of method is that some common types of injected traffic, such as ICMP used for "ping" measurements, may be treated differently by the network. The traffic may be treated with a lower priority than other traffic or take different routes. Some networks may even disable this type of traffic.

It is also possible to simulate application traffic over a network, executing dummy operations or executing lower-layer operations through the use of, for example, agent-based software. The disadvantages of such approaches are that they only measure approximations of network behaviour and are limited to a particular network path. Use of such methods also involves added server overheads, thus skewing any results obtained.

Another method is to observe and measure data flow in the network, identifying and measuring the elapsed time between specific correlated events in the network, such as request-response pairings. An example of a request-response based system is marketed by NetScout Systems, Inc. of Westford, Massachusetts, in which measurements are made by client and server agents, and stored in a local Management Information Base (MIB) indexed by client and server. Measurements are carried out at specified points in the network located close to the application server and major groups of clients, averaged and brought together to deliver an average round trip delay between the client and server.

Although such approaches can give averaged approximations of network performance using round-trip timing results, the information they provide can lack resolution about the network under observation and be over-dependent upon agent location within the network. One may desire to observe the performance of the network more closely, for example on a transaction by transaction basis. Timing synchronisation issues may also affect any measurements made. Such approaches can also lack portability and scalability over different networks and the different circuit routes possible within a network.

The present invention seeks to provide an improved method and apparatus for measurement of transmission delays in a network.

The invention provides a method of measuring round-trip delay affecting data transfer in a data network, the method comprising the steps of:

(a) monitoring a bi-directional data stream at respective first and second monitoring points in the network to identify events relating to said data transfer and being of interest for said measurement;

(b) identifying among the events at each monitoring point occurrences of first and second events travelling as part of said data stream in first and second directions, said first and second directions being respectively from the first monitoring point to the second monitoring point and back again;

(c) determining as a first time interval the interval between the first and second events at the first monitoring point;

(d) determining as a second time interval the interval between the first and second events at the second monitoring point; and

(e) processing said first and second time intervals so as to determine a round-trip network delay between said first and second monitoring points.

By such a method, round-trip delay can be measured independent of any delay between the first and second events at said second monitoring point, and independently of any difference between the time references local to each monitoring point. Accordingly, synchronisation between monitor time references in different parts of world is not critical to the accuracy of the measurement.

In a preferred embodiment, the identification step (b) comprises selecting the first and second events such that the second event is a response to the first event.

By recording stimulus/response times and establishing a flow record summarising a particular transaction, it is possible to match records from multiple measurement points and produce a round-trip delay measurement for that particular transaction. The set of transactions can be operated upon according to user defined criteria. This allows for increased accuracy and scalability over existing solutions. Packet and stream identification is possible for both directions of a bi-directional data stream.

There are many examples of stimulus and response packets or events within a typical data stream-oriented protocol, for example, the packets that make up the set-up or tear-down handshakes in a data stream.

The step (a) may comprise recording a plurality of events and their occurrence times at a respective monitoring point without specifically identifying said first and second events, the recorded events including identifiers which can be correlated to identify said first and second events, the identifying step (b) being performed using said identifiers together with the occurrence times.

The identifiers may be identifiers extracted from the data stream itself. Alternatively or in addition, the identifiers may include an element generated locally by a monitoring station.

For example, a data packet may be identified as belonging to a particular data stream by extracting the end points from the packet or by recognising an explicit data stream identifier. Where the data stream identifier is not sufficiently unique across time, it can be augmented with a timestamp or other locally-generated element.

In embodiments where an identifier contained within the data stream is only locally unique, for example as in Asynchronous Transfer Mode (ATM), the step (b) may include mapping from locally unique identifiers to a globally unique identifier, by referring to a configuration database.

The step (a) may be performed by a combination of first and second monitoring stations remote from one another and connected to the network at the first and second monitoring points respectively, while at least step (e) is performed by a processing station remote from at least one of said monitoring stations using data recorded by said monitoring stations. The monitoring stations may in particular use respective local time references without invalidating the measurement.

The steps (b), (c) and (d) may be performed at the respective monitoring stations in addition to step (a), or may be performed at said processing station. In this way the first and second time intervals for each monitoring point can be directly represented in the records generated, rather than the individual event occurrence times. This allows both the data volume and the processing burden at the processing station to be reduced.

The step (e) may in particular comprise measurement of round-trip delay measurements for various data streams by taking the difference of said first and second intervals for pairs of first and second messages representing stimulus and response in respective data streams.

All, some or none of the steps (b) to (e) may be performed in real time as events occur, or may be performed in batches only. For example, steps (b), (c) and (d) may be performed continuously by the monitoring stations, which then report their results in batches for processing according to step (e).

The various steps of the method as set forth above can conveniently be implemented in various combinations of both hardware and software, for example in a single digital signal processor chip, although of course hard-wired arrangements could be used instead.

The invention yet further provides an apparatus for measuring round-trip delay affecting data transfer in a data network, the apparatus comprising means arranged to perform the steps of a method according to the invention as set forth above.

The apparatus may comprise:

- a first monitoring station adapted for connection to a network at a first monitoring point and including means arranged to perform step (c) of the method according to one embodiment of the invention as set forth above;
- a second monitoring station adapted for connection to a network at a first monitoring point and including means arranged to perform step (d) of said method; and
- a processing station adapted for performing step (e) of said method.

The apparatus may alternatively comprise first and second monitoring stations each adapted to perform the step (a) of the method to generate a record of occurrence times and identifiers for a plurality of events at a respective monitoring point without specifically identifying first and second events, and a processing station adapted to receive the records from the monitoring stations and to perform the steps (b), (c) and (d), based on the received records.

The processing station may be separate from either monitoring station, or integrated with one of the monitoring stations.

The invention yet further provides a network probe apparatus comprising all the monitoring station technical features of an apparatus according to the invention as set forth above.

The invention yet further provides a processing apparatus comprising all the processing station technical features of an apparatus according to the invention as set forth above.

In a further aspect of the invention, it is also possible to calculate the Loss in a signal between the two monitoring points by correlating the two flow records and comparing the traffic counts.

Yet further aspects of the invention and optional features, together with their advantages, will be apparent to the skilled reader from the description of specific embodiments which follow.

## BRIEF DESCRIPTION OF THE DRAWINGS

Embodiments of the invention will now be described, by way of example only, by reference to the accompanying drawings, in which:

Figure 1 shows measuring apparatus according to an embodiment of the invention connected to a telecommunication network;

Figure 2 is a timeline diagram illustrating the monitoring of stimulus and response messages transmitted as part of a data stream between two stations of the network in the apparatus of Figure 1;

Figure 3 is a timeline diagram illustrating a method of measuring round-trip delay between first and second monitoring points implemented by the apparatus of Figure 1;

Figure 4 is a diagram showing steps involved in the operation of the system for calculating round-trip delay.

Figure 5 is a flow diagram showing steps implemented by monitoring stations in calculating stimulus and response times; and

Figure 6 is a flow chart of a process for constructing flow records implemented in the monitoring stations.

## DETAILED DESCRIPTION OF THE EMBODIMENTS

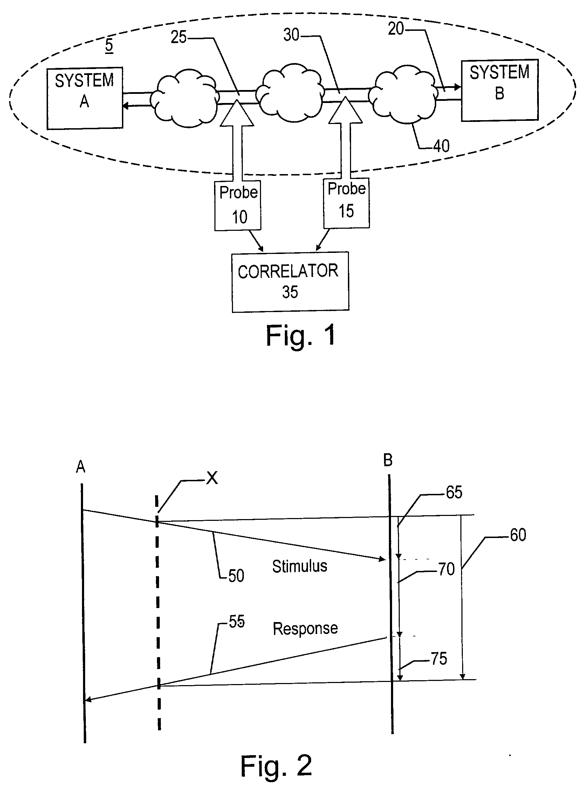

Figure 1 shows schematically a communications network 5 to which are connected stations A and B and two monitoring probes 10, 15. The term "probe" is used herein to refer to a functionally self-contained system or sub-system designed to carry out the required data gathering (and perhaps preliminary analysis) for a bearer in a network circuit. Each probe 10, 15 is connected to a bearer at a respective measuring point 25, 30 and monitors a bi-directional data stream 20 flowing between stations A and B. The probes 10, 15 are connected to a correlator component 35, so as to complete the measurement apparatus. The correlator component 35 may be located remotely and conveniently form the probes 10, 15, for example as a suitably equipped computer.

Network "clouds" 40 here indicate spatial and structural separation between to the measurement points 25, 30 in addition to systems A and B. The network may be any capable of transmitting bi-directional data stream such as ATM or Transfer Control Protocol (TCP). The probes 10, 15 can be deployed at different locations across such a network in a variety of configurations. It is possible to implement the monitoring system using a larger number of probes than is shown. Using known techniques individual circuits within a network can also be identified and probed separately in order to assemble a more accurate record of events within the network.

Figure 2 is a timeline diagram, in which time is shown as flowing down the figure. Each point on the network is represented by a vertical line, with the transmitting systems A and B at left and right respectively. The broken line labelled X represents the location where a single probe 45 is connected to the network at some convenient tapping point.

A stimulus 50 and a response 55, represented here by diagonal arrows, are transmitted on a data stream between system A to system B. This shows the progression of the stimulus 50 and response 55 packets across a network 5. The stimulus and response may for example be handshaking messages involved in the setting up of a voice or internet protocol (IP) connection.

The round-trip delay as seen at X for this stimulus/response pair through the network, as seen by the probe 45, is composed of three components: a first traversal delay 65 from the probe 45 to System B, the response delay 70 of System B before a response 55, and a second traversal delay 75 from System B back to the probe 45. The values of these component delays are, however, not distinguishable at the probe. The probe 45 measures only the total stimulus/response delay 60, which will be greater than the stimulus/response delay within system B and less than the delay seen at system A.

In order to calculate the actual round-trip delay of a transaction, calculations involving the different measurable components in the round trip delay must be made. Given that the System B and the probe location 45 may be thousands of kilometres apart, and administered by different authorities, there is not generally even a common time reference source which could be used to compare the arrival and departure times of events at different locations, for this purpose.

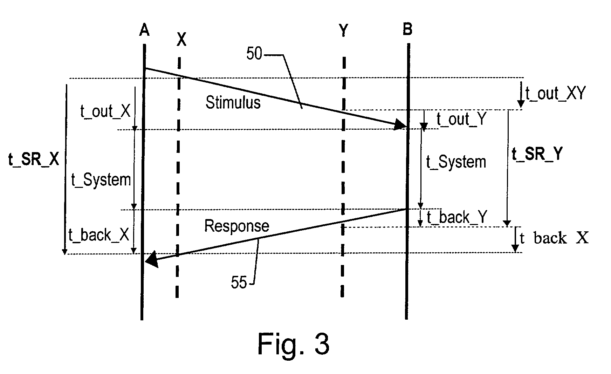

Figure 3 is a diagram showing stimulus/response delays t_SR_X and t_SR_Y and components thereof, as measured by the two probes 10, 15 respectively in the arrangement of Figure 1. Here the broken lines X and Y represent the locations of where the first and second probes 10, 15 connect to the network.

The stimulus/response delay (round trip delay) as seen by probe 10 is composed of:

$$t\_SR\_X = t\_out\_X + t\_System + t\_back\_X$$

where:

t_out_X is the time taken for the stimulus to travel between the probe 10 at point X and System B;
t_System is the system response time; and
t_back_X is the time taken for the response to travel between System B and the probe 10 at point X.

Similarly, the stimulus/response delay as seen by probe 15 measuring at point Y is:

$$t\_SR\_Y = t\_out\_Y + t\_System + t\_back\_Y$$

where

t_out_Y is the time taken for the response to travel between point Y and System B;
t_System is the is the system response time; and
t_back_Y is the time taken for the response to travel between System B and point Y.

Other components shown on the diagram are:

t_out_XY, the time taken for the stimulus to travel between X and Y; and
t_back_XY, the time taken for the response to travel Y and X.

These last two components and the system response time t_System are not known in practice. However, the difference between measurements t_SR_X and t_SR_Y gives the total of the time taken for the stimulus to travel from probe point X to point Y and the time taken for the response to travel back from Y to X. This difference is the round-trip delay between the probe points X and Y.

The actual round-trip delay is calculated by the following:

$$
\begin{aligned}
t\_SR\_X - t\_SR\_Y \\
&= t\_out\_X + t\_System + t\_back\_X - (t\_out\_Y + t\_System + t\_back\_Y) \\
&= (t\_out\_X - t\_out\_Y) + (t\_System - t\_System) + (t\_back\_X - t\_back\_Y) \\
&= t\_out\_XY + t\_back\_XY \\
&= \text{round-trip delay between probes X \& Y.}
\end{aligned}
$$

It will be seen that the unknown time components such as t_System (system response time) which are present as components of both measurements cancel each other out. Since the component measurements are each only made at a single site and are of duration rather than absolute times, then the accuracy of the measurement is not dependent on the accuracy of the synchronisation of the clocks of the probes.

Having explained the theoretical basis for the measurement of round-trip delay in the system of Figure 1, the operation and structure of the measurement system in practice will now be explained.

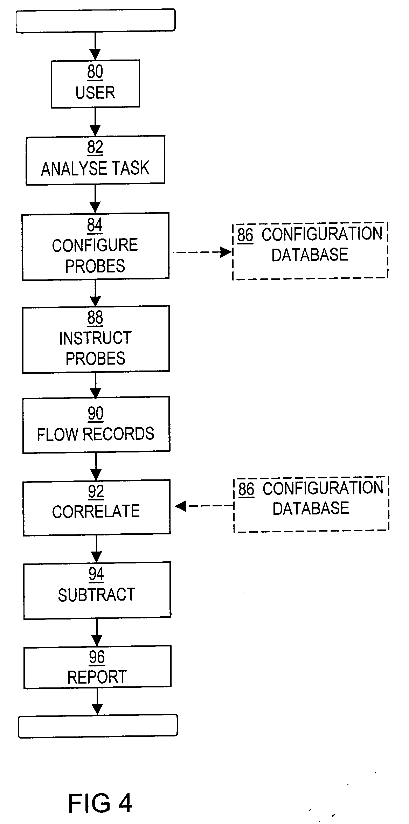

Figure 4 is a diagram showing steps involved in the operation of the system for calculating round-trip delay. The procedure of measuring the round-trip delay of a transaction is conveniently implemented in two stages: individual measurements that are made in the same way at all the probes, and a measurement that is made at the correlator to calculate the round trip delay between the probes. It is for this reason that the probes 10, 15 and the correlator 35 are shown as separate functions in the apparatus of Figure 1, although the correlator and at least one of the probes may be integrated in one piece of equipment if desired.

The first step 80 in the operation of the system is initialisation by the user. This can include whatever various tasks are needed to start up and setup the system to enable measurements.

At 82 and 84 the type of task needed to identify the bi-directional data stream is analysed and the probes configured, respectively. Different protocols, such as IP and ATM, can have different methods of representing stream identifiers. The system must take this into account to be able to uniquely identify a bi-directional data stream at any point, and identify what resources are needed and what procedures are to be followed.

At 84 the probes are configured. This will generally require distribution of a configuration database 86 which enables a probe to be uniquely identified in the context of the network and is used in the production of flow records by probes. Additional operating parameters can be set at this stage.

The pre-monitoring and configuration steps at 82 and 84 are described in greater detail below.

Next, the probes are instructed 88 to monitor the network and flow records are constructed at 90, by each monitoring station separately. This involves monitoring data streams and compiling flow records for later correlation and processing. Some processing may be performed in the monitoring station, as detailed further below. The instruction can define criteria for filtering the message streams to identify those of interest. By monitoring a bi-directional data stream at respective first and second monitoring points in the network and identifying corresponding stimulus and response events. The actual component measurements made by the probe of the system are shown in Figure 3 and described above. The data stream analysis made by the probe components of the system in order to compile the flow records are detailed later.

The records from two monitoring stations are then processed for correlation 92. Input from the configuration database 86 may be required at this stage in order to match up flow records for corresponding stimulus and response events.

The next step 94 is to subtract the time delays t_SR_X and t_SR_Y for the corresponding stimulus and response events, which have been recorded by the two monitoring stations and correlated with one another. This provides the components shown in Figure 3 . This produces the actual round-trip delay measurement which is reported and/or recorded at 96 via displays, communication links as appropriate.

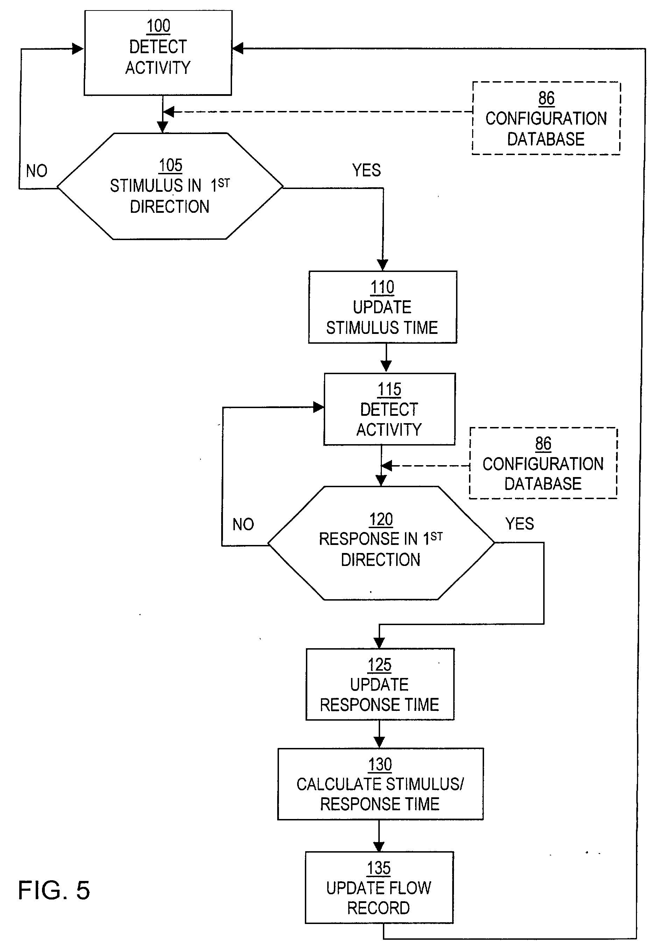

Figure 5 is a flow diagram showing steps in monitoring the traffic at each monitoring point, to calculate stimulus and response time intervals.

A number of the state machines as depicted by the flow diagram of Figure 5 can be active within one probe at any one time. This would be the case where a single probe is monitoring multiple bi-directional data streams being carried on the same physical bearer. This type of set-up and use would be a standard mode of operation for the probe.

At 100 activity is detected on the network bearer being monitored by the network probe. Input from a network configuration database 86 may be needed in order to correctly identify the nature of the data stream detected. At a next stage 105 the network activity being monitored is tested to ascertain whether or not it is a stimulus signal in a first direction, according to the filtering criteria defined by the task in hand. These stages can be likened to a first state of the process, viewed as a state machine. If there is no stimulus matching the filtering criteria then there no action is performed and the process returns to 100.

On detecting a stimulus in a first direction, a stimulus time record is first updated 110, and then a second state of the state machine is entered. Further network activity is detected 115 and tested 120 to ascertain whether or not it is a response to the stimulus detected and identified at 100, 105. Again, input from a network configuration database 86 may be needed in order to correctly identify the nature of the data stream detected. If no response is detected then no action is performed. On detecting a response, however, a response time record is updated at 125. The stimulus-response time interval is now calculated at 130 and the flow record updated at 135. After the flow record has been updated 135 the system returns to detecting input and testing for a stimulus signal.

The steps depicted in Figure 5 can be carried out within the probe and the results passed to a separate component for processing to provide the round trip times. The correlator component receives the stimulus/ response times and flow records and processes them to provide the final result.

Alternatively, only the steps involving detection of the stimulus times and response times need be carried out within the probe component of the system. Data comprising the event details and times can be passed on directly to the correlator component without being processed, the correlator carrying out the necessary calculations to produce the stimulus/ response time intervals.

In either case, results can be passed on to the correlator component either as bulk data or on a record-by-record basis. It will be appreciated that the same process can be conducted in parallel at several monitoring points, and for several streams at each monitoring point, whether implemented as a state machine or otherwise.

The bi-directional data stream 20 can be according to various network protocols, for example ATM or TCP. The probes are capable of monitoring a bearer between two systems A and B and examining transmitted packets.

Each probe constructs a data stream record that contains one or more of the stimulus and response times. Where there are multiple stimulus and response measurements they can be identified either by their order or through the addition of a timestamp.

Within a data stream-oriented protocol there are stimulus and response packets that can be recognised by the probe, for example the packets that make up the set-up or tear-down handshakes between systems. Each individual probe in the system is able to measure the time at which it receives a packet that it recognises as indicating a stimulus or response event.

Any data stream visible to the probes 10, 15 should be uniquely identified in a manner that allows it to be recognised at any point in the network 5. A packet can be identified as belonging to a particular data stream, either through extracting the end points from the packet or by recognising an explicit data stream identifier. Where the data stream identifier is not sufficiently unique across time it can be augmented with a timestamp. This is carried out for both directions of a bi-directional data stream.

In technologies such as ATM where the data stream identifier is only locally unique mapping is carried out from the locally unique identifier to a globally unique identifier by referring to a configuration database. This configuration database may be in the form of a Management Information Base (MIB), of a type known to those skilled in the art. At any point in the network where the data stream 20 is visible, the probes 10, 15 can measure the time at which they observe a pair of recognisable events, one in each direction. These events can be of the form of a stimulus and response, for example the set-up request for a TCP connection and the acknowledgement from the requested entity.

In practice, each probe builds a flow record summarising particular transactions for the data stream, some of which are the timestamps of the stimulus/response event pairs, and from these the stimulus/response event time calculate can be calculated. Within the probe, packets are classified according to the bi-directional data stream that they belong to and the direction of flow within the data stream. A flow record is then built for each bi-directional data stream and output either when the data-stream is terminated, or on a defined time-boundary. The flow record in this embodiment contains basic statistics and the stimulus-response time intervals which are calculated according to Figure 4. Measurements do not depend on knowledge of the topology of the network that is carrying the data stream, the only constraint being that the data stream has to be visible to two (or more) probes.

Each probe is capable of building multiple flow records in parallel, with each record summarising a particular data stream being carried on the physical bearer.

A flow record for a bi-directional data stream contains at least fields containing information on the data stream identifier and stimulus and response times.

The data stream identifier is an identifier that allows the data stream to be uniquely identifier. This can take a number of forms such as:

- Global Data Stream ID - an identifier that identifies the bi-directional data stream across the whole network.
- Local Data Stream ID - an identifier that identifies the bi-directional data stream within the context of a physical or logical bearer.
- Global Bearer ID - the identifier that identifies the bearer in the context of the network.
- Local Bearer ID - the identifier that identifies the bearer in the context of a probe.
- Probe ID - the identifier that uniquely identifies a probe in the context of the monitoring network.

In the case of the Stimulus-Response time it is possible to collect more than one stimulus-response time for any flow record, for example, for the opening handshake and the closing handshake of a transmission.

Other flow statistics can also be included, such as traffic counts of the number of bytes, the number of packets that have been transmitted, or counts of specific types of packet that have been seen (for example, the number of particular signalling packets).

It is also possible to calculate Loss between the two monitoring points by correlating the two flow records and comparing the traffic counts.

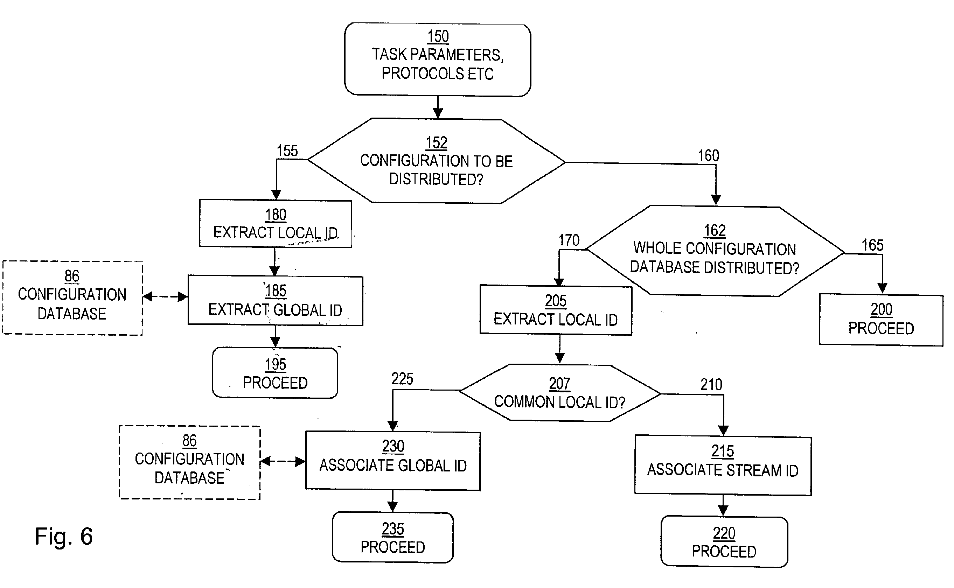

Figure 6 is a flow chart of the task analysis step 82. This shows the initial pre-monitoring stages of operation where the task is analysed in terms of data stream protocols, addressing conventions and the like, and how the configuration database is distributed as appropriate for use in constructing the flow records. Using pre-monitoring analysis aids in speeding the actual monitoring process and calculation of the round trip delay, saving on system resources.

It will be appreciated that different conditions will apply depending on the application and the protocol types being monitored. For maximum flexibility, the present apparatus is able to adapt between these different situations, as will now be explained. Three possible routes to constructing a flow record from a bi-directional data stream are shown in this example. These examples are for the cases where the configuration database is distributed to the probes, either in entirety or in part, or where the configuration database is not distributed to the probes at all.

The first step 150 is for the apparatus to setup for monitoring, including setting of task parameters and determination of what protocol the data stream uses. The next step 152 is to determine if a configuration database has been distributed to the probes. This is important in deciding how the flow records will eventually be constructed. If configuration database has not been distributed, then a "bottom up" method will be followed 155. If the configuration database has been distributed to the probes in any way then an alternative method is followed 160. Either a "top down" 165 or a "hybrid" 170 approach will be taken dependent on the how the configuration database has been distributed. If the whole of the database has been distributed then the top down process is followed. If only a part of the database has been distributed then the hybrid 170 process is followed.

In the case for the bottom up method, where no configuration database has been distributed to the probes, the apparatus determines how the flow records will be identified for correlation. To do this, a set of local identifiers are extracted 180 from the data stream which are used to extract 185 a unique global data stream identifier from the configuration database 86. The local identifier(s) used to extract the global identifier can be built up from such local identifiers as the local stream ID in addition to local bearer ID and probe ID. Once this information has been extracted the apparatus then proceeds 195 with correlating the data streams and calculating the round-trip delay time as described in Figure 4 above.

In certain technologies such as IP there may be a local data stream ID such as a connection identifier, identifying connection end points, that allows the flow records to be correlated without consulting the configuration database 86.

Where at least part of the configuration database has been distributed the apparatus determines at step 162 if the whole of the configuration database has been distributed to the probes, in which case a top down method will be followed 165. The apparatus in this case does not need to distribute any configuration data or extract other identification data to the probes from the data stream. The apparatus can now proceed 200 in constructing flow records, correlation and calculation, as described above. Any flow records produced by the probes will in this case automatically use the global data stream ID.

Where only some aspects of the global configuration is distributed to the probes a hybrid method will be followed 170. This is the case when the ID distributed to the probe, for example the global bearer ID, can only partially identify the data stream probed. In such a case local identifiers are extracted 205 in order to construct a unique identifier.

The probe needs to be able to identify and associate the two directions of the bi-directional stream. There are two approaches to this dependent upon the technology being monitored. As discussed elsewhere, for technologies such as ATM the two directions share a local data stream ID, VPI/VCI for ATM. A check 207 for a common local data stream ID is carried out. If a common local data stream ID is recognised 210 then the two directions are associated 215 based on recognition of this common ID. When this step has been completed the apparatus can then proceed 220 in constructing flow records, correlation and calculation, as described above.

Where no common local ID can be identified an alternative method is followed 225 by the apparatus. The configuration mapping the data stream direction and the local data stream ID to a single global data stream ID is propagated to the probe using information from the configuration database 86. The two directions can now be associated 230 via the global data stream ID. The apparatus can then proceed 235 in constructing flow records, correlation and calculation, as described above.

The data stream record is flushed from the probe on a time boundary or when the data stream under consideration is completed. When a data stream record is flushed from the probe it is written to the correlator 35 function, which can match the records for the same data stream (seen independently by different probes) by matching the data stream identifiers. The correlator is able to produce round-trip delay measurements for the various data streams by taking the difference of their stimulus/response times, using the equations given above, or equivalents.

The correlator 35 can receive flow records from many probes, although in this embodiment measurements are possible using only two probes. Flow records are brought together from the chosen measurement points and exactly matched so that the round trip delay for a particular transaction can be calculated. The correlator function can be implemented as a single function or distributed through a larger system.

The skilled reader will appreciate that the invention is not limited to the specific implementations and applications detailed above. It can be implemented in various combinations of hardware and software, and with our without hardwired or programmable circuits. The various components of the probe and correlator functions described could be replaced by a general purpose computer, for example a personal computer such as a notebook PC, interfaced to the network by the appropriate hardware. Another implementation is a handheld device with the appropriate hardware connectivity and embedded processor with software.

The recorded data can be processed on a continuous basis, or recorded, brought together and processed much later, on an off-line basis.

The probe system and correlator function may also be integrated into part of some other network analysis package. The various components needed to perform the tasks of probing the network, collecting data and calculating results from that data may be distributed and physically remote from each other with, for example central server correlating the data gathered by remote probe stations.

**Claims**

1. A method of measuring round-trip delay affecting data transfer in a data network, the method comprising the steps of:

(a) monitoring a bi-directional data stream at respective first and second monitoring points in the network to identify events relating to said data transfer and being of interest for said measurement;
(b) identifying among the events at each monitoring point occurrences of first and second events travelling as part of said data stream in first and second directions, said first and second directions being respectively from the first monitoring point to the second monitoring point and back again;
(c) determining as a first time interval the interval between the first and second events at the first monitoring point;
(d) determining as a second time interval the interval between the first and second events at the second monitoring point; and
(e) processing said first and second time intervals so as to determine a network delay between said first and second monitoring points.

2. A method according to claim 1 wherein the identification step (b) comprises selecting the first and second events such that the second event is a response to the first event.

3. A method according to claim 1 or 2 wherein packet and stream identification is for both directions of a bi-directional data stream.

4. A method according to any of claims 1 to 3 wherein the step (a) comprises recording a plurality of events and their occurrence times at a respective monitoring point and wherein those events are specifically identified, the identifying step (b) being performed using said identified events together with the occurrence times.

5. A method according to any of claims 1 to 3 wherein the step (a) comprises recording a plurality of events and their occurrence times at a respective monitoring point without specifically identifying said first and second events, the recorded events including identifiers which are correlated to identify said first and second events, the identifying step (b) being performed using said identifiers together with the occurrence times.

6. A method according to claim 5 wherein the identifiers are identifiers extracted from the data stream itself.

7. A method according to claim 5 wherein the identifiers include an element generated locally by a monitoring station.

8. A method according to claim 5 where the data packet is identified as belonging to a particular data stream by extracting the end points from the packet or by recognising an explicit data stream identifier.

9. A method according to claim 5 wherein the identifiers are the packets that make up the set-up or tear-down handshakes in a data stream.

10. A method according to any preceding claim wherein the data stream identifiers are augmented with a timestamp or other locally-generated element.

11. A method according to any preceding claim wherein the step (b) includes mapping from locally unique identifiers to a globally unique identifier, by referring to a configuration database.

12. A method according to any preceding claim wherein step (a) is performed by a combination of first and second monitoring stations remote from one another and connected to the network at the first and second monitoring points respectively, while at least step (e) is performed by a processing station remote from at least one of said monitoring stations using data recorded by said monitoring stations.

13. A method according to any preceding claim wherein the monitoring stations in particular use respective local time references without invalidating the measurement.

14. A method according to any preceding claim wherein the steps (b), (c) and (d) are performed at the respective monitoring stations in addition to step (a).

15. A method according to any preceding claim wherein step (e) comprises measurements of round-trip delay measurements for various data streams by taking the difference of said first and second intervals for pairs of first and second messages representing stimulus and response in respective data streams.

16. A method according to any preceding claim wherein some or none of the steps (b) to (e) are performed in real time as events occur, or are performed in batches only.

17. A method according to any preceding claim wherein steps (b), (c) and (d) are performed continuously by the monitoring stations, which then report their results in batches for processing according to step (e).

18. A method according to any preceding claim wherein said probes monitor a plurality of multiplexed data streams across a physical bearer.

19. An apparatus for measuring round-trip delay affecting data transfer in a data network, the apparatus comprising means arranged to perform the steps of a method according to the invention as set forth in the claims above.

20. An apparatus for measuring round-trip delay affecting data transfer in a data network, the apparatus comprising:

  - a first monitoring station adapted for connection to a network at a first monitoring point and including means arranged to perform step (c) of the method according to claim 1;
  - a second monitoring station adapted for connection to a network at a first monitoring point and including means arranged to perform step (d) of said method; and
  - a processing station adapted for performing step (e) of said method.

21. An apparatus as claimed in claim 20 alternatively comprising first and second monitoring stations each adapted to perform the step (a) of the method to generate a record of occurrence times and identifiers for a plurality of events at a respective monitoring point without specifically identifying first and second events, and a processing station adapted to receive the records from the monitoring stations and to perform the steps (b), (c) and (d), based on the received records.

22. A network probe apparatus comprising all the monitoring station technical features of an apparatus as set forth in claim 20 or claim 21.

23. A processing apparatus comprising all the processing station technical features of an apparatus as set forth in any of claims 19 to 21.

24. An apparatus according to claim 20 or claim 21 wherein said probes monitor a plurality of multiplexed data streams across a physical bearer.

25. A method for calculating the loss in a signal between the two monitoring points by correlating two flow records and comparing the traffic counts in accordance with the method described in any of claims 1 to 18.

Fig. 1

Fig. 2

Fig. 3

```
          ┌──────────────────┐
          └──────────────────┘
                   │
                   ▼
          ┌──────────────────┐
          │        80        │
          │       USER       │
          └──────────────────┘
                   │
                   ▼
          ┌──────────────────┐
          │        82        │
          │   ANALYSE TASK   │
          └──────────────────┘
                   │
                   ▼
          ┌──────────────────┐          ┌ ─ ─ ─ ─ ─ ─ ─ ─ ─ ─ ┐
          │        84        │          │ 86  CONFIGURATION
          │    CONFIGURE     │ ─ ─ ─ ─▶ │     DATABASE         │
          │     PROBES       │          └ ─ ─ ─ ─ ─ ─ ─ ─ ─ ─ ┘
          └──────────────────┘
                   │
                   ▼
          ┌──────────────────┐
          │        88        │
          │     INSTRUCT     │
          │      PROBES      │
          └──────────────────┘
                   │
                   ▼
          ┌──────────────────┐
          │        90        │
          │   FLOW RECORDS   │
          └──────────────────┘
                   │
                   ▼
          ┌──────────────────┐          ┌ ─ ─ ─ ─ ─ ─ ─ ─ ─ ─ ┐
          │        92        │          │ 86  CONFIGURATION
          │    CORRELATE     │ ◀ ─ ─ ─  │     DATABASE         │
          └──────────────────┘          └ ─ ─ ─ ─ ─ ─ ─ ─ ─ ─ ┘
                   │
                   ▼
          ┌──────────────────┐
          │        94        │
          │    SUBTRACT      │
          └──────────────────┘
                   │
                   ▼
          ┌──────────────────┐
          │        96        │
          │     REPORT       │
          └──────────────────┘
                   │
                   ▼
          ┌──────────────────┐
          └──────────────────┘
```

# FIG 4

**100**
DETECT
ACTIVITY

**86**
CONFIGURATION
DATABASE

NO — **105**
STIMULUS IN 1ST
DIRECTION — YES

**110**
UPDATE
STIMULUS TIME

**115**
DETECT
ACTIVITY

**86**
CONFIGURATION
DATABASE

NO — **120**
RESPONSE IN 1ST
DIRECTION — YES

**125**
UPDATE
RESPONSE TIME

**130**
CALCULATE STIMULUS/
RESPONSE TIME

**135**
UPDATE FLOW
RECORD

FIG. 5

150
TASK PARAMETERS,
PROTOCOLS ETC

152
CONFIGURATION TO BE
DISTRIBUTED?

155

160

180
EXTRACT LOCAL ID.

86
CONFIGURATION
DATABASE

185
EXTRACT GLOBAL ID

195
PROCEED

162
WHOLE CONFIGURATION
DATABASE DISTRIBUTED?

170

165

205
EXTRACT LOCAL ID

200
PROCEED

207
COMMON LOCAL ID?

225

210

86
CONFIGURATION
DATABASE

230
ASSOCIATE GLOBAL ID

215
ASSOCIATE STREAM ID

235
PROCEED

220
PROCEED

Fig. 6

EP 1 206 067 A1

**European Patent Office**

**EUROPEAN SEARCH REPORT**

Application Number

EP 00 30 9806

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br>Y<br>A | US 6 058 102 A (REHBEHN KENNETH J ET AL)<br>2 May 2000 (2000-05-02)<br>* abstract *<br>* figures 1-3 *<br><br>* column 2, line 38 - column 3, line 12 *<br>* column 6, line 60 - column 8, line 33 *<br>* column 18, line 37 - column 19, line 18 *<br>* claims 9,24,25,28-31,45,47,64,67,74-77 * | 1-3,12,<br>13,15,<br>17-20<br>10<br>4-9,11,<br>14,16,<br>21-25 | H04L12/24<br>H04L12/26 |
| X<br><br>A | US 5 521 907 A (ENNIS JR JAMES D ET AL)<br>28 May 1996 (1996-05-28)<br>* abstract *<br><br>* figures 1,2,6 *<br>* column 1, line 1 - column 3, line 33 *<br>* column 6, line 1 - column 7, line 35 *<br>* claims 1,5,6,8,9,12,13,19 * | 1-5,12,<br>15,17,<br>19,20<br>6-11,16,<br>18,21-25 | |
| X<br><br>Y<br>A | US 6 041 352 A (BURDICK MATT ET AL)<br>21 March 2000 (2000-03-21)<br>* abstract *<br>* column 1, line 48 - column 2, line 4 *<br><br><br>* column 5, line 32-37 *<br>* column 6, line 1-26 *<br>* column 7, line 14-25 *<br>* column 7, line 50 - column 8, line 30 *<br>* claims 1-15 *<br><br>-/-- | 1,3,4,<br>12,15,<br>19,20<br>10<br>2,5-9,<br>11,13,<br>14,<br>16-18,<br>21-25 | TECHNICAL FIELDS SEARCHED (Int.Cl.7)<br><br>H04L |

The present search report has been drawn up for all claims

| Place of search | Date of completion of the search | Examiner |
|---|---|---|
| THE HAGUE | 23 April 2001 | Cichra, M |

16

**European Patent Office**

## EUROPEAN SEARCH REPORT

Application Number

EP 00 30 9806

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 793 976 A (CHEN THOMAS M ET AL) 11 August 1998 (1998-08-11) <br> * abstract * <br> * figures 1-4 * <br> * column 3, line 53 - column 4, line 3 * <br> * column 4, line 41 - column 6, line 25 * | 1-25 | |
| | | | **TECHNICAL FIELDS SEARCHED** (Int.Cl.7) |

The present search report has been drawn up for all claims

| Place of search | Date of completion of the search | Examiner |
|---|---|---|
| THE HAGUE | 23 April 2001 | Cichra, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 206 067 A1

## ANNEX TO THE EUROPEAN SEARCH REPORT
## ON EUROPEAN PATENT APPLICATION NO.

EP 00 30 9806

23-04-2001

| Patent document cited in search report | | | Publication date | Patent family member(s) | | | Publication date |
|---|---|---|---|---|---|---|---|
| US 6058102 | A | | 02-05-2000 | AU | 1520999 | A | 31-05-1999 |
| | | | | EP | 1033002 | A | 06-09-2000 |
| | | | | WO | 9925085 | A | 20-05-1999 |
| US 5521907 | A | | 28-05-1996 | CA | 2218886 | A | 31-10-1996 |
| | | | | WO | 9634476 | A | 31-10-1996 |
| US 6041352 | A | | 21-03-2000 | JP | 11346238 | A | 14-12-1999 |
| US 5793976 | A | | 11-08-1998 | CA | 2250278 | A | 09-10-1997 |
| | | | | EP | 0892958 | A | 27-01-1999 |
| | | | | JP | 2000507779 | T | 20-06-2000 |
| | | | | WO | 9737310 | A | 09-10-1997 |

EPO FORM P0459